# EUROPEAN PATENT SPECIFICATION

(11) **EP 0 396 834 B1**
(45) Date of publication and mention of the grant of the patent: **30.08.1995**
(21) Application number: 89304816.5
(22) Date of filing: 12.05.1989
(51) Int. Cl.: G06F 17/30, G06F 9/44

(54) **Version-control in a data-processing system**
Versionskontrolle in einem Datenverarbeitungssystem
Contrôle de versions dans un système de traitement de données

(43) Date of publication of application: 14.11.1990
(73) Proprietor: International Business Machines Corporation, Armonk, N.Y. 10504 (US)
(72) Inventor: Macfarlane, Peter Robert, Winchester Hampshire SO22 5AW (GB)
(74) Representative: Bailey, Geoffrey Alan

(56) References cited:
- EP-A- 0 284 924
- EP-A- 0 290 828
- IEEE TRANSACTIONS ON SOFTWARE ENGINEERING, vol. SE-13, no. 1, January 1987, pages 39-47, IEEE, New York, US; S.K. SARIN et al.: "Discarding obsolete information in a replicated database system"
- IEEE COMPUTER SOCIETY, OFFICE AUTOMATION SYMPOSIUM, Gaithersburg, MD, 27th-29th APRIL 1987, PAGES 171-177, IEEE, NEW YORK, US; S.H. SON: "A SYNCHRONIZATION SCHEME FOR REPLICATED DATA IN DISTRIBUTED INFORMATION SYSTEMS"

## Description

This invention relates to the field of data processing systems. More particularly this invention relates to data processing systems with both local and remote processors.

It is known to provide data processing systems in which one or more workstations having a local processor and storing one or more files are connected to a remote processor, such as a mainframe computer. The term "file" is used to indicate any information such as application programs, operating systems, databases, dynamic data, etc. which is or may be held on a data processing system. A problem with such systems is that the files stored by a workstation often require updating so as to repair defects in software, update database material, etc.

European Published Patent Application EP-A-0 284 924 describes a system in which a workstation supplies a mainframe with a list of what versions of what files are stored by the workstation upon a request from the workstation. The mainframe compares the versions of the files stored by the workstation with the versions of those files stored by the mainframe and automatically sends the workstation replacement updated versions of the files where necessary.

This system overcomes some of the problems associated with the maintenance of files on workstations by providing a system in which the updating of the files takes place automatically without the need for any user actions.

Disclosed in IEEE Transactions on Software Engineering, Vol. SE-13, No. 1, January 1987, pages 39-47 is a replicated database architecture in which updates processed at a site are stored to allow reconciliation of later-arriving updates in a way that preserves mutual consistency between the replicated sites. The disclosure is directed to a protocol which allows sites to agree to discard updates which are older than a particular timestamp. The protocol executes updates in the order that they are received at a site but in such a way that the database reflects those updates as if they had been executed in the order in which they were issued (as determined by a timestamp).

Viewed from one aspect the present invention as claimed provides a data processing system having at least one local processor storing a version of at least one file and a remote processor having means for determining from information of said version stored by said local processor if said version stored by said local processor should be replaced by a version of said one file stored by said remote processor, characterised in that said local processor has means for determining upon receipt of said replacement version if any intervening change has occurred in said version stored by said local processor since said information was supplied to said remote processor and allows replacement of said file on condition that no intervening change has occurred.

The present invention both recognises and solves a problem which can occur when seeking to provide a system which includes the feature of automatically updating files stored on local processors by those stored by remote processors. The problem is illustrated by considering a system in which a local processor is connected to more than one remote processor. In this case the local processor may provide an indication of the files it has stored to more than one remote processor with the result that a number of different remote processors may then compete to update the files stored by the local processor.

Such a system could result in a file which had already been updated by another remote processor being replaced again unnecessarily. The present invention provides a system in which the local processor checks to see that there has not been an intervening update (i.e. between the remote processor receiving the information as to what files are held on the local processor and the local processor receiving the replacement file) of the file in question before allowing the update to proceed.

Any intervening update could be the result of the action of another remote processor or possibly the result of action by the operator of the local processor. It will however be seen that the invention is particularly applicable to systems having a plurality of remote processors since it overcomes the problem of potential conflicts between the remote processors.

In preferred embodiments of the present invention said local processor supplies said information to said remote processor. This feature has the advantage that the remote processor need not maintain records of what versions of what files are stored by said remote processor. This lessens the storage and processing overhead that must be borne by the remote processor.

In particular preferred embodiments of the present invention said local processor determines if an intervening update has occurred using a data key which accompanies said replacement version. This advantageously simple arrangement could take a number of forms, for example the data key may comprise a complete copy of the information indicating the files stored which the local processor originally passed to the remote processor, the local processor then being able to compare this with the current files stored. Alternatively, some sequence or letters or numbers could be passed between the processors. However, in preferred embodiments of the present invention said data key is indicative of how many times said local processor had been updated when said information was supplied to said remote processor and said local processor is adapted to compare said data key with how many times said local processor has been updated when said replacement version is received thereby determining if any intervening update has occurred.

Such an arrangement has the advantage that the amount of information passed between the processors is lowered thereby reducing the complexity of its interpretation and the time necessary for its transmission. The local processor need only compare the number of times its files have actually been updated with the number indicated by the data key in order to determine if there has been an intervening update.

In a particularly simple and therefore advantageous embodiment of the invention, said local processor stores a number which is incremented each time said local processor is updated, said number being supplied by said local processor to said remote processor together with said information, said number being supplied back by said remote processor to said local processor together with said replacement version for comparison with said number currently stored by said local processor thereby determining if any intervening update has occurred.

As well as preventing an update if an intervening update has taken place, in preferred embodiments of the present invention said information is updated if replacement is not allowed in order that said remote processor may determine if replacement is still necessary.

This feature ensures that the remote processor with the most recent version of a file is allowed to update the local processor even if a remote processor holding an intermediate version of the file updates the local processor first.

In a particular preferred embodiment of the present invention said local processor stores flags to indicative of what information was supplied to each remote processor and upon receipt of a replacement version said local processor uses said flag for said remote processor supplying said replacement version to determine if an update has occurred since that remote processor was sent said information.

Using this feature the system can avoid having to pass information necessary to validate update requests between processors. Instead the local processor itself keeps track of what files it was storing when it supplied that information to a particular remote processor so that it may then check to see if any intervening updates have occurred before allowing an update from a particular remote processor to proceed. This arrangement has the advantage that the code for controlling the updating can reside solely on the local processor and thereby avoid the need to provide memory and processing for this function at each remote processor.

In an advantageously simple embodiment said local processor stores flags indicative of what information was supplied to each remote processor and upon receipt of a replacement version said local processor uses said flag for said remote processor supplying said replacement version to determine if an update has occurred since that remote processor was sent said information. When a request to update is received from a given remote processor the local processor checks its current numerical indicator against the one recorded for that remote processor and only allows the update to proceed if they are the same. If the update is not allowed to proceed the local processor may as before supply the remote processor with the information concerning its current files and therefore allow the remote processor to determine if an update is still necessary.

Viewed from another aspect the present invention as claimed provides a method of operating a data processing system wherein at least one local processor stores a version of at least one file and a remote processor determines from information indicative of said version stored by said local processor if said version stored by said local processor should be replaced by a version of said file stored by said remote processor, characterised in that upon receipt of said replacement version said local processor determines if any intervening change has occurred in said version stored by said local processor since said information was supplied to said remote processor and allows replacement of said file on condition that no intervening change has occurred.

An embodiment of the invention will now be described, by way of example only, with reference to the accompanying drawings in which:

Figure 1 is a block diagram showing a data processing network of known type and to which the invention may be applied.

Figure 2 is a block diagram showing a host processor and a remotely connected personal computer in which the host can update data files within the personal computer in accordance with the present invention.

Figure 3 schematically illustrates the operation of an embodiment of the invention.

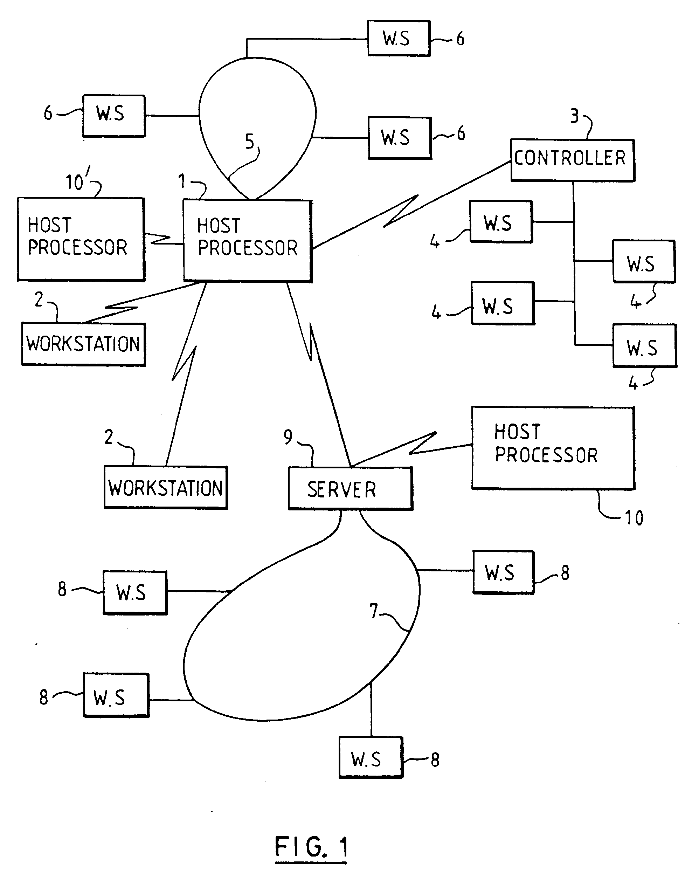

Figure 1 illustrates a data processing system in accordance with the present invention comprising a host processor 1 to which are connected a number of workstations. These workstations may be connected to the host processor 1 in a star configuration as represented by workstations 2 or through a controller controlled network as represented by controller 3 and workstations 4. Alternatively the workstation could be connected to the host processor, either locally as represented by loop 5 and workstations 6 or remotely as represented by loop 7 and workstations 8. In the latter case, the loop 7 may be a local area network (LAN) served by a server 9 connected to the host processor 1. One or more further host processors 10 and 10′ may be provided to which some or all other various workstations 2, 4, 6 or 8 may be connected, either directly or indirectly.

Such data processing networks are known and no further description of the network per se is needed. The invention will be described in terms of workstations, which are constituted by suitably programmed/configured personal computers such as the IBM Personal Computers, the IBM Personal Computer XT or the IBM Personal Computer AT or the IBM Personal System/2 personal computers. Generally, a personal computer will normally have a magnetic diskette file by means of which computer programs may be loaded on to it. It is possible to have a personal computer with no magnetic disc drives in which case any programming needs to be loaded over some kind of communications link.

In accordance with the present invention, use is made of a library of files stored within the host processor or processors and which is used to update files within a particular connected personal computer (workstation) when that particular workstation requires a particular file. There is no need for the host processor to keep a record of what files are kept by all the workstations which can be connected to it.

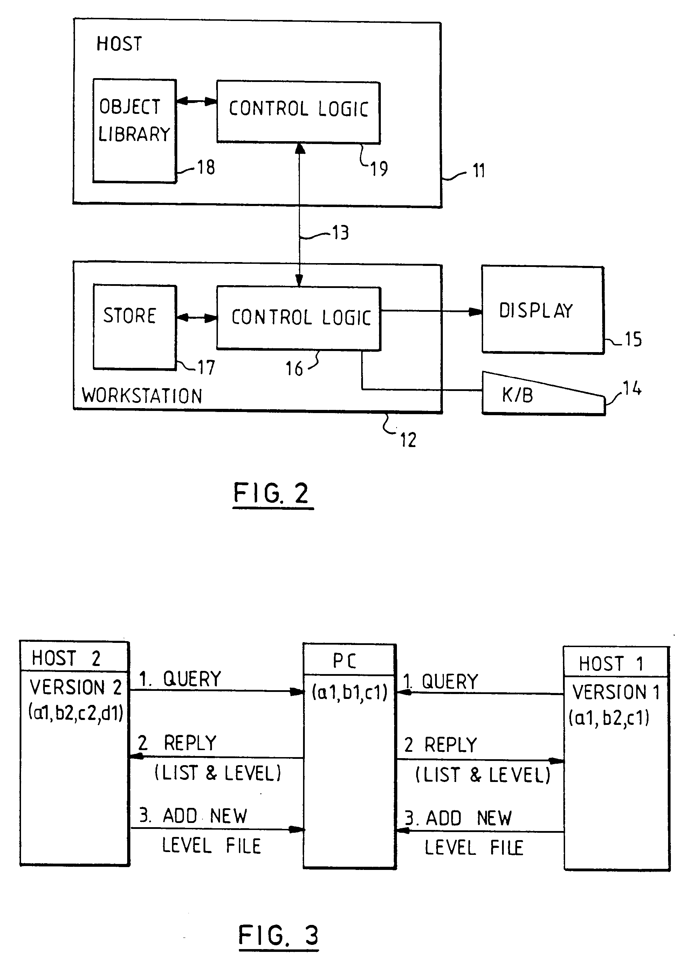

Figure 2 is a simplified block diagram showing the connection of a single host processor 11 to a workstation 12 over a communication link 13. As is normal, the workstation 12 constituted by a personal computer, includes a keyboard 14 and a display 15 operating under control of control logic 16 together with a store 17 for storing data and programs. Printers, plotters and other input/output devices, not shown, may also be connected to or form part of the workstation 12. The control logic 16 may be constituted by hardwired logic, programmed logic or combinations thereof. The store 17, normally a magnetic disk or diskette store, will contain one or more computer programs. The or each computer program will consist of a number of files. The files are variable in size represent an identifiable block of code consisting of one or more code modules. If an error is found within the file, that code either has to be replaced or modified to correct the error.

The host processor 11 therefore is provided with a store 18 which contains a library of object code which may be required by workstations connected to that host processor. If a file requires to be updated for any reason for a particular release/version of a PC program, then that file is updated. Once updated to the new level, the control logic 19 will ensure that any workstation 12 connected to the host processor 11 will be supplied with the new version file.

Figure 3 is a chart summarising the updating procedure. For the purposes of illustration, it is assumed that a particular PC program has two versions, version 1 stored on host 1 having files a, b and c at levels 1, 2 and 1 respectively and represented by a1, b2 and c1 and version 2 having data files a, b, c and d at levels 1, 2, 2 and 1 respectively stored on host 2. The object libraries of these two versions are stored in respective host processors. The personal computer has stored within it version 1 of the program with data files a, b and c all at level 1. In other words the version of the program installed in the personal computer is at a down-level. The updating process starts with one of the host processor sending a query to the PC.

As a result of the query from the host the PC responds with a reply which includes a list of the data files it has installed together with an indication of the levels of those files. Together with this indication the PC also sends the host processor a numeric key. the numeric key is a number held by the PC which is incremented each time the files stored by the PC are changed. Thus each value of the numeric key will be associated with a particular combination of files stored by the PC.

As contact with the workstation is made by any other host in the network, the same numeric key is returned to that host, since the specific combination of files and file levels is the same. If one of the hosts in the network determines that it holds files at a newer level than those held on the PC, it indicates to the PC that it is ready to perform an update operation. This indication is accompanied by the numeric key that was sent by the PC to the host at the time the file levels were reported. This forms a request for update from the host.

On receipt of the request for update the PC compares the numeric key of the request with the current numeric key of the PC. If the values of the keys match, then the host is reacting to the same combination of files and levels as currently exist on the PC and the pending update operation is valid. The PC increments the numeric key, and grants the host permission to continue. The PC records that an update is now in progress and sets an update in progress flag. However, if the values of the keys differ then the files or levels on the PC have been updated, possibly by another host or by the PC, in the interval since the files and levels were reported. In this case the pending update operation by this host may be invalid since the library file level may no longer be more recent than that of the PC. The PC denies the requesting host permission to update, and returns instead the current file list and levels, together with the current numeric key. The host may then re-evaluate the need for update, and , only if still requried, repeat the update request.

While a valid update is in progress, a further host may make a request for update. At this time, the PC should either immediately deny permission, or queue the request to be dealt with when the current update process is complete, at which time the request would be denied and the new current files, levels and numeric key would be returned.

When any valid update completes, the PC resets the update in progress flag, to allow further update by other hosts, subject to the numeric key validation process described.

An alternative embodiment of this invention may not actually send the numeric key from the PC to the host, but may instead record the key in the PC together with the host to which it has been sent. When an update request is received from a particular host, the PC validates the key held in the PC for this host against the current value of the key, using the rules described above. This avoids the need for the host to receive and resend the key.

Returning now to the example shown in Figure 3, both host 1 and host 2 query the PC concerning the files it is storing and their levels. The PC then returns this information to both hosts together with the numeric key having value n. Both hosts then analyse the information sent them to determine if an update is required. Both hosts determine that an update is required. For some reason, such as faster processing or communication, host 1 makes its request for the update before host 2. The request for update from host 1 causes the update in progress flag to be set which suspends the update being attempted by host 2.

Together with the request for update host 1 returns the numeric key n to the PC. The PC compares this to the current value of the numeric key and determines that the update is valid. The PC then increments the numeric key to a value n + 1 and allows the update to proceed thereby replacing files a1, b1 c1 with files a1, b2 c1. After the update from host 1 has finished the PC resets the update in progress flag which allows the update being attempted by host 2 to be processed further.

The request for update from host 2 is accompanied by the numeric key n and this time when the PC compares the numeric key being sent it with the current value of n + 1 it determines an intervening update has taken place.

The PC refuses the request for update and sends host 2 its new list of files and versions together with the new numeric key so that host 2 may determine if an update is still required. In this case host 2 holds more recent files than host 1 so an update will still be required and host 2 will carry out this update in the manner described above for host 1. Host 2 will thereby replace files a1, b2 c1 with files a1, b2, c2, d1.

Each host does not have to keep a record of what programs and their levels that are installed in the workstations connected it. Upgrading of the version stored in the host will ensure upgrading of the versions stored in the connected PCs as they are needed.

The invention is applicable to PC programs which communicate with hosts. However, it is possible to provide this facility for any PC program installed on a PC provided that the PC can communicate with a host computer which has a copy of that program's data files within the object library.

Where the host is able to recognise what version of a program is installed at the personal computer, the mechanism described can also be used to supply a data file to the PC should the PC's response indicate that it does not contain a data file which should be included in that version of the program.

## Claims

1. A data processing system having at least one local processor (2,12) storing a version of at least one file (a,b,c) and a remote processor (1,11) having means for determining from information indicative of said version stored by said local processor if said version stored by said local processor should be replaced by a version of said file stored by said remote processor, characterised in that said local processor has means for determining upon receipt of said replacement version if any intervening change has occurred in said version stored by said local processor since said information was supplied to said remote processor and allows replacement of said file on condition that no intervening change has occurred.

2. A data processing system as claimed in claim 1, wherein said local processor is adapted to supply said information to said remote processor.

3. A data processing system as claimed in claims 1 or 2, wherein said data processing system includes a plurality of said remote processors.

4. A data processing system as claimed in claims 1, 2 or 3, wherein said local processor has means for determining if an intervening update has occurred using a data key which accompanies said replacement version.

5. A data processing system as claimed in claim 4, wherein said data key is indicative of how many times said local processor had been updated when said information was supplied to said remote processor and said local processor is adapted to compare said data key with how many times said local processor has been updated when said replacement version is received thereby determining if any intervening update has occurred.

6. A data processing system as claimed in claim 5, wherein said local processor is adapted to store a number which is incremented each time said local processor is updated, said number being supplied by said local processor to said remote processor together with said information, said number being supplied back by said remote processor to said local processor together with said replacement version for comparison with said number currently stored by said local processor thereby determining if any intervening update has occurred.

7. A data processing system as claimed in claims 1, 2 or 3, wherein said local processor is adapted to store flags indicative of what information was supplied to each remote processor and, upon receipt of a replacement version by said local processor, to use said flag for said remote processor supplying said replacement version to determine if an update has occurred since that remote processor was sent said information.

8. A data processing system as claimed in claim 7, wherein said local processor is adapted to store a number which is incremented each time said local processor is updated, said flags being indicative of the value of said number when said information is supplied.

9. A data processing system as claimed in any preceding claim, including means for updating said information supplied to said remote processor if replacement is not allowed in order that said remote processor may determine if replacement is still necessary.

10. A method of operating a data processing system wherein at least one local processor (2, 12) stores a version of at least one file (a, b, c) and a remote processor (1,11) determines from information indicative of said version stored by said local processor if said version stored by said local processor should be replaced by a version of said file stored by said remote processor, characterised in that upon receipt of said replacement version said local processor determines if any intervening change has occurred in said version stored by said local processor since said information was supplied to said remote processor and allows replacement of said file on condition that no intervening change has occurred.

## Patentansprüche

1. Ein Datenverarbeitungssystem, das wenigstens einen lokalen Prozessor (2,12) hat, welcher eine Version von wenigstens einer Datei (a,b,c) speichert und einen fernen Prozessor (1,11), der Mittel enthält, um anhand der Information aus dieser Datei, die von dem lokalen Prozessor gespeichert wurde, zu bestimmen, ob die Version, die von dem lokalen Prozessor gespeichert wurde, durch eine Version von dieser einen Datei ersetzt werden sollte, die von dem fernen Prozessor gespeichert wurde, dadurch gekennzeichnet wird, daß der lokale Prozessor Mittel hat, um nach Empfang der Ersatzversion zu bestimmen, ob eine eingreifende Änderung in der Version vorgekommen ist, die von dem lokalen Prozessor gespeichert wurde, da diese Information an den fernen Prozessor geliefert wurde und den Ersatz dieser Datei unter der Bedingung erlaubt, daß keine eingreifende Änderung vorgekommen ist.

2. Ein Datenverarbeitungssystem wie in Anspruch 1 angemeldet, wobei der lokale Prozessor angepaßt ist, um die Information an den fernen Prozessor zu liefern.

3. Ein Datenverarbeitungssystem wie in den Ansprüchen 1 oder 2 angemeldet, wobei das Datenverarbeitungssystem eine Vielzahl von fernen Prozessoren enthält.

4. Ein Datenverarbeitungssystem wie in den Ansprüchen 1, 2 oder 3 angemeldet, wobei der lokale Prozessor Mittel enthält, um zu bestimmen, ob eine eingreifende Aktualisierung vorgekommen ist, indem ein Datenschlüssel verwendet wird, welcher die Ersatzversion begleitet.

5. Ein Datenverarbeitungssystem wie in Anspruch 4 angemeldet, wobei der Datenschlüssel angibt, wie oft der lokale Prozessor aktualisiert wurde, wann die Information an den fernen Prozessor geliefert wurde, und der lokale Prozessor angepaßt wird, um mit diesem Datenschlüssel zu vergleichen, wie oft der lokale Prozessor aktualisiert wurde, wann die Ersatzversion empfangen wurde und somit zu bestimmen, ob eine eingreifende Aktualisierung vorgekommen ist.

6. Ein Datenverarbeitungssystem wie in Anspruch 5 angemeldet, wobei der lokale Prozessor angepaßt wird, um eine Zahl zu speichern, die jedesmal, wenn der lokale Prozessor aktualisiert wird, inkrementiert wird, wobei die Zahl von dem lokalen Prozessor zusammen mit dieser Information an den fernen Prozessor geliefert wird, und diese Zahl von dem fernen Prozessor zusammen mit der Ersatzversion an den lokalen Prozessor zurückgeliefert wird, damit dieser die von dem lokalen Prozessor aktuell gespeicherte Zahl vergleicht und bestimmt, ob eine eingreifende Aktualisierung vorgekommen ist.

7. Ein Datenverarbeitungssystem wie in den Ansprüchen 1, 2 oder 3 angemeldet, wobei der lokale Prozessor angepaßt ist, um Merker zu speichern, die anzeigen, welche Information an jeden fernen Prozessor geliefert wurde und nach Empfang einer Ersatzversion verwendet der lokale Prozessor diesen Merker für den fernen Prozessor, welcher die Ersatzversion lieferte, um festzulegen, ob eine Aktualisierung vorgekommen ist, während dem fernen Prozessor diese Information übermittelt wird.

8. Ein Datenverarbeitungssystem wie in Anspruch 7 angemeldet, wobei der lokale Prozessor angepaßt ist, um eine Zahl zu speichern, die jedesmal bei Aktualisierung des lokalen Prozessors inkrementiert wird, wobei die Merker den Wert der Zahl zu dem Zeitpunkt angeben, als die Information geliefert wurde.

9. Ein Datenverarbeitungssystem wie in irgendeinem vorhergehenden Anspruch angemeldet, das Mittel enthält, um die Information zu aktualisieren, die von dem fernen Prozessor geliefert wird, wenn der Ersatz nicht genehmigt wird, damit der ferne Prozessor bestimmen kann, ob der Ersatz noch erforderlich ist.

10. Ein Verfahren zum Betrieb eines Datenverarbeitungssystems, wobei wenigstens ein lokaler Prozessor (2,12) eine Version von wenigstens einer Datei (a, b, c) speichert und ein ferner Prozessor (1,11) anhand der Information, die Angaben von der von dem lokalen Prozessor gespeicherten Version enthält, bestimmt, ob die von dem lokalen Prozessor gespeicherte Version durch eine Version der von dem fernen Prozessor gespeicherten Datei ersetzt werden sollte, dadurch gekennzeichnet, daß der lokale Prozessor nach Empfang der Ersatzversion bestimmt, ob irgendeine eingreifende Änderung in der von dem lokalen Prozessor gespeicherten Version vorgekommen ist, während diese Information an den fernen Prozessor geliefert wurde und genehmigt den Ersatz dieser Datei unter der Voraussetzung, daß keine eingreifende Änderung vorgekommen ist.

## Revendications

1. Système de traitement de données comportant au moins un dispositif de traitement local (2, 12) stockant une version d'au moins un fichier (a, b, c) et un dispositif de traitement à distance (1, 11) comportant des moyens pour déterminer à partir de l'information indicatrice de ladite version stockée par ledit dispositif de traitement local si ladite version stockée par ledit dispositif de traitement local doit être remplacée par une version dudit fichier stockée par ledit dispositif de traitement à distance, caractérisé en ce que ledit dispositif de traitement local comporte des moyens pour déterminer lors de la réception de ladite version de remplacement si un changement d'intervention s'est produit dans ladite version stockée par ledit dispositif de traitement local puisque ladite information a été appliquée audit dispositif de traitement à distance et permet le remplacement dudit fichier à la condition qu'aucun changement d'intervention ne se soit produit.

2. Système de traitement de données selon la revendication 1, dans lequel ledit dispositif de traitement local est apte à appliquer ladite information audit dispositif de traitement à distance.

3. Système de traitement de données selon la revendication 1 ou 2, dans lequel ledit système de traitement de données comporte une pluralité desdits dispositifs de traitement à distance.

4. Système de traitement de données selon la revendication 1 ou 2, dans lequel ledit dispositif de traitement local comporte des moyens pour déterminer si une mise à jour d'intervention s'est produite en utilisant un code de données qui accompagne ladite version de remplacement.

5. Système de traitement de données selon la revendication 4, dans lequel ledit code de données est indicateur du nombre de fois où ledit dispositif de traitement local a été mis à jour lorsque ladite information était appliquée audit dispositif de traitement local et ledit dispositif de traitement local est apte à comparer ledit code de données avec le nombre de fois où ledit dispositif de traitement local a été mis à jour lorsque ladite version de remplacement est reçue afin de déterminer s'il s'est produit une mise à jour d'intervention.

6. Système de traitement de données selon la revendication 5, dans lequel ledit dispositif de traitement local est apte à stocker un nombre qui est incrémenté à chaque fois que ledit dispositif de traitement local est mis à jour, ledit nombre étant appliqué par ledit dispositif de traitement local audit dispositif de traitement à distance avec ladite information, ledit nombre étant ré-appliqué par ledit dispositif de traitement à distance audit dispositif de traitement local avec ladite version de remplacement pour la comparaison avec ledit nombre en cours de stockage par ledit dispositif de traitement local afin de déterminer s'il s'est produit une mise à jour d'intervention.

7. Système de traitement de données selon les revendications 1, 2 ou 3, dans lequel ledit dispositif de traitement local est apte à stocker des drapeaux indicateurs de l'information qui a été appliquée à chaque dispositif de traitement à distance et, lors de la réception d'une version de remplacement par ledit dispositif de traitement local, à utiliser ledit drapeau pour ledit dispositif de traitement à distance appliquant ladite version de remplacement afin de déterminer si une mise à jour s'est produite puisque ce dispositif de traitement à distance avait reçu ladite information.

8. Système de traitement de données selon la revendication 7, dans lequel ledit dispositif de traitement à distance est apte à stocker un nombre qui est incrémenté chaque fois que ledit dispositif de traitement local est mis à jour, lesdits drapeaux étant indicateurs de la valeur dudit nombre lorsque ladite information est appliquée.

9. Système de traitement de données selon l'une quelconque des revendications précédentes, comportant des moyens pour mettre à jour ladite information appliquée audit dispositif de traitement à distance si le remplacement n'est pas permis afin que ledit dispositif de traitement à distance puisse déterminer si le remplacement est toujours nécessaire.

10. Procédé de fonctionnement d'un système de traitement de données dans lequel au moins un dispositif de traitement local (2, 12) stocke une version d'au moins un fichier (a, b, c) et un dispositif de traitement à distance (1, 11) détermine à partir de l'information indicatrice de ladite version stockée par ledit dispositif de traitement local si ladite version stockée par ledit dispositif de traitement local doit être remplacée par une version dudit fichier stocké par ledit dispositif de traitement à distance, caractérisé en ce que lors de la réception de ladite version de remplacement ledit dispositif de traitement local détermine si tout changement d'intervention s'est produit dans ladite version stockée par ledit dispositif de traitement local puisque ladite information a été appliquée audit dispositif de traitement à distance et permet le remplacement dudit fichier à la condition qu'aucun changement d'intervention ne se soit produit.
